# EUROPEAN PATENT APPLICATION

(11) **EP 4 728 878 A1**
(43) Date of publication of application: **22.04.2026**
(21) Application number: 24822614.4
(22) Date of filing: 05.06.2024
(51) Int. Cl.: A23L 33/00, A23L 33/17, A23L 33/125, A23L 33/115, A23L 33/15, A23L 33/16, A23L 33/19, A23L 33/18, A23L 33/21

(54) **NUTRITIONAL COMPOSITION FOR PREGNANT WOMEN AND PREPARATION METHOD THEREFOR**

(30) Priority: 16.06.2023 CN 202310719292
(71) Applicant: Hainan Tianzhuang Nutrition Engineering Co., Ltd, Haikou, Hainan 570311 (CN); West China Second University Hospital, Sichuan University, Chengdu, Sichuan 610044 (CN)
(72) Inventor: CHENG, Guo, Chengdu, Sichuan 610044 (CN); ZHANG, Lin, Chengdu, Sichuan 610044 (CN); ZHANG, Lingli, Chengdu, Sichuan 610044 (CN); ZENG, Jikai, Haikou, Hainan 570311 (CN)
(74) Representative: Altmann Stößel Dick Patentanwälte PartG mbB
(86) International application number: PCT/CN2024/097520
(87) International publication number: WO 2024/255663

(57) **Abstract**

A nutritional composition for pregnant women and a preparation method therefor. The nutritional composition for pregnant women is prepared from the following raw materials in parts by weight: 324-630 parts of protein substances, 286-584 parts of fat substances, 187-369 parts of carbohydrate, 182-309 parts of dietary fiber substances, 12.2-23.9 parts of multivitamin, and 230-473 parts of complex minerals. The nutritional formulation for pregnant women can provide rational nutrition supplements for pregnant women, which can not only meet the nutritional requirements of pregnant women and guarantee the requirements for fetal development, but also help in maintaining the proper growth of body weight and the stability of blood glucose level of pregnant women, and preventing the occurrence of related adverse pregnancy outcomes in women with gestational diabetes mellitus and high-risk groups thereof, so that the nutritional formulation is suitable for pregnant women who need nutritional support.

## Description

### Field of the invention

The present invention belongs to the field of food technology, and specifically relates to a nutritional composition for pregnant women and the preparation method therefor.

### Background of the invention

With the development of the economy and changes in lifestyle, it is common for pregnant women to have unreasonable dietary intake, insufficient physical activity, excess energy, and excessive weight gain. This has also led to an increasing number of pregnant women with high-risk factors for gestational diabetes mellitus (GDM), such as advanced age and unbalanced diet. At the same time, deficiencies in micronutrients such as calcium, iron, iodine, folic acid, and vitamin D still exist in some populations. Numerous studies have reported that GDM has a significant impact on the fetus. GDM increases the incidence of macrosomia and stillbirth, and the incidence of respiratory distress syndrome is also 5 to 6 times higher compared to newborns of non-diabetic pregnant women. It can also lead to severe complications such as premature birth, fetal malformation, hypocalcemia, and hyperbilirubinemia. Therefore, it is necessary to provide a qualified diet to ensure adequate nutrient intake for pregnant women and to prevent the occurrence of gestational diabetes.

The Obstetrics and Gynecology Branch of the Chinese Medical Association and the Perinatal Medicine Branch of the Chinese Medical Association recommend meeting the nutritional needs of pregnant women by medical nutrition, reducing the risk of adverse pregnancy outcomes, and encouraging healthy eating to achieve and maintain normal blood glucose levels, while ensuring adequate fetal development and limiting excessive weight gain in both the mother and fetus. Based on [Yang Yang, Effect of nutrition intervention on gestational diabetes mellitus and its effect on the prognosis of neonate [J], Chinese Journal of General Practice, 2016, 14(9)], nutritional intervention effectively controls blood glucose levels in pregnant women with GDM, but it does not disclose how dietary nutritional intervention is specifically implemented. Currently, there are no research reports on health foods that can both control blood glucose levels in pregnant women and provide a balanced supply of multiple nutrients.

### Content of the invention

To address the above issues, the present invention provides a nutritional composition for pregnant women, which is prepared from raw materials in the following parts by weight:
324-630 parts of protein substances, 286-584 parts of fat substances, 187-369 parts of carbohydrate, 182-309 parts of dietary fiber substances, 12.2-23.9 parts of multivitamin, and 230-473 parts of complex minerals;
the protein substances are composed of whey protein, casein, and collagen peptide in a mass ratio of 380-450:50-70:40-50;
the fat substances are composed of low erucic acid rapeseed oil, sunflower oil, medium-chain triglycerides, soybean oil, and edible carriers in a mass ratio of 70-80:60-65:70-120:60-70:110-120;
the dietary fiber substances are composed of resistant dextrin and oligo fructose in a mass ratio of 130-200:40-80.

Further, the carbohydrate is maltodextrin.

Further, the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione, D-biotin, cholecalciferol, cyanocobalamin, and an edible carrier in 9-12:0.8-1.4:0.4-1.1:0.2-0.6:0.1-0.3:0.1-0.2:0.06-0.08:0.1-0.2:0.02-0.03:0.003-0.004:0.002-0.004:0.0003-0.0005:0.0002-0.0003:6-10.

Further, the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 50-75:3-5:30-60:40-60:2-4:80-150:0.5- 2.5:0.004-0.005:10-15.

More further, it is prepared from raw materials in the following parts by weight:
517 parts of protein substances, 390 parts of fat substances, 241 parts of maltodextrin, 215 parts of dietary fiber substances, 19.4 parts of multivitamin, and 322 parts of complex minerals;
the protein substances are composed of whey protein, casein, and collagen peptide in a mass ratio of 420:53:44;
the fat substances are composed of low erucic acid rapeseed oil, sunflower oil, medium-chain triglycerides, soybean oil, and edible carriers in a mass ratio of 70:62:75:66:117;
the dietary fiber substances are composed of resistant dextrin and oligofructose in a mass ratio of 172:43;
the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione,, D-biotin, cholecalciferol, cyanocobalamin, and an edible carrier in 9.8:0.86:1.03:0.51:0.14:0.14:0.06:0.12:0.02:0.003:0.002:0.0003:0.0003:6.7144;
the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 52.6:4.3:58.6:54:2:136:1.4:0.005:13.095.

More further, it is prepared from raw materials in the following parts by weight:
496 parts of protein substances, 420 parts of fat substances, 203 parts of maltodextrin, 195 parts of dietary fiber substances, 23.4 parts of multivitamin, and 260 parts of complex minerals;
the protein substances are composed of whey protein, casein, and collagen peptide in a mass ratio of 388:66:42;
the fat substances are composed of low erucic acid rapeseed oil, sunflower oil, medium-chain triglycerides, soybean oil, and edible carriers in a mass ratio of 72:61:107:68:112;
the dietary fiber substances are composed of resistant dextrin and oligo fructose in a mass ratio of 135:60;
the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione, D-biotin, cholecalciferol, cyanocobalamin, and an edible carrier in 11.6:1.31:0.42:0.26:0.22:0.18:0.08:0.16:0.021:0.004:0.004:0.0005:0.0002: 9.1403;
the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 72.1:4:33.7:47:3.1:89:0.8:0.004:10.296.

More further, the edible carrier in the fat substances is any one or more of maltooligosaccharide, sodium caseinate, and mixed tocopherol concentrate; and the edible carrier in the multivitamins or complex minerals is maltodextrin.

The present invention also provides a method for preparing the nutritional composition for pregnant women mentioned above, which comprises the following steps:
1) The raw materials are weighed according to the specified parts by weight;
2) Multivitamins, oligofructose, collagen peptides, and casein are mixed and stirred at 20-30 rpm for 20-30 min to obtain premix 1; resistant dextrin, carbohydrates, and complex minerals are mixed and stirred at 20-30 rpm for 20-30 min to obtain premix 2;
3) The premix 1 and premix 2 obtained in step 2) are mixed and stirred at 20-30 rpm for 20-30 min to obtain the total mix 1; whey protein, fat substances, and total mix 1 are mixed and stirred at 20-30 rpm for 40-60 min to obtain the final product.

The present invention finally provides the use of the above nutritional composition for pregnant women in the manufacture of food for improving the physical function of pregnant women.

Further, the food is a functional food or dietary supplement that regulates blood sugar and blood lipids in pregnant women, and/or promotes normal weight gain during pregnancy.

Unless otherwise specified, all references to "parts" in the present invention refer to parts by weight.

In the nutritional composition for pregnant women of the present invention, whey protein and casein serve as sources of high-quality protein, providing a variety of essential amino acids and bioactive substances; collagen peptides, which are easy to digest and absorb, reduce the burden on the gastrointestinal tract; carbohydrates are provided by maltodextrin, which has good solubility and is easily digested and absorbed by the human body; fats are derived from low erucic acid rapeseed oil, sunflower oil, medium-chain triglycerides, and soybean oil, providing essential fatty acids required by the body; dietary fiber is derived from resistant dextrin and oligofructose, effectively maintaining blood glucose levels in pregnant women; L-ascorbic acid, dl-α-tocopheryl acetate, niacinamide, pyridoxine hydrochloride, D-calcium pantothenate, thiamine mononitrate, vitamin A palmitate, riboflavin, folic acid, phytomenadione, D-biotin, cholecalciferol, and cyanocobalamin provide vitamins required by the body; iron pyrophosphate, zinc citrate, tricalcium phosphate, magnesium carbonate, dipotassium hydrogen phosphate, potassium citrate, sodium citrate, and sodium selenite provide minerals required by the body.

The nutritional supplement food obtained by a specific proportion formula of the above ingredients can, on the one hand, provide high-quality protein for fetal growth, promote fetal development, enhance the immunity of pregnant women, and maintain their health; on the other hand, it helps pregnant women reduce the burden on their gastrointestinal tract, promotes collagen synthesis in the body, enhances skin tissue metabolism, and reduces the formation of cesarean section scars; on the one hand, it effectively lowers blood sugar and blood lipids in pregnant women, maintains stable blood sugar levels, promotes the proliferation of beneficial bacteria in the body, improves the intestinal flora environment, prevents constipation, and maintains the health of pregnant women; on the other hand, it reduces body fat accumulation in pregnant women, lowers their blood lipids and cholesterol, and maintains normal cardiovascular and cerebrovascular function; on the one hand, it promotes fetal brain development, maintains normal function of the fetal nervous system, and reduces the incidence of neonatal hypocalcemia, tetany, and maternal osteomalacia; on the other hand, it reduces the occurrence of neonatal hemolysis and hemolytic anemia by protecting the red blood cell membrane of newborns, maintains normal blood calcium concentration in pregnant women, prevents cramps in pregnant women, and meets the needs of fetal bone growth and development, thereby facilitating the healthy growth of the fetus; on the one hand, it ensures fetal growth and development, maintains the normal operation of the body's immune system, enhances the immunity of pregnant women, and maintains the health of women and fetuses.

The nutritional formula for pregnant women in the present invention can provide a reasonably balanced nutritional supplement for women during pregnancy, which not only meets the nutritional needs of pregnant women themselves and ensures the necessary development of the fetus, but also helps maintain appropriate weight gain and stable blood glucose levels in pregnant women, preventing adverse pregnancy outcomes related to women with GDM and their high-risk groups. It is suitable for pregnant women who require nutritional support.

Obviously, based on the above content of the present invention, according to the common technical knowledge and the conventional means in the field, other various modifications, alternations, or changes can further be made, without department from the above basic technical spirits.

With reference to the following specific examples, the above content of the present invention is further illustrated. But it should not be construed that the scope of the above subject matter of the present invention is limited to the following examples. The techniques realized based on the above content of the present invention are all within the scope of the present invention.

### Description of Figures

Figure 1. The response curve of average blood glucose 2 hours after a meal for glucose and the nutritional supplement for pregnant women according to the present invention (n = 20, n represents the 20 adult women included in the GI value test);
Figure 2. Weight level of pregnant mice during gestation;
Figure 3. Results of glucose tolerance test in pregnant mice (* indicates *P* < 0.05 compared to the wild-type group);
Figure 4. Results of insulin tolerance test in pregnant mice (* indicates *P* < 0.05 compared with the wild-type group);
Figure 5. Test results of blood glucose levels in pregnant mice during gestation (* indicates *P* < 0.05 compared to the wild-type group);
Figure 6. Test results of insulin levels in pregnant mice during pregnancy (* indicates *P <* 0.05 compared to the wild-type group);
Figure 7. C-reactive protein levels in pregnant mice (# indicates *P* < 0.05 compared to the model group);
Figure 8. HE staining results of kidneys from pregnant mice (scale bar: 100 µm).

### Examples

### Example 1. Nutritional supplement for pregnant women according to the present invention

### Formula:

517 parts of protein: comprising 420 parts of whey protein, 53 parts of casein, and 44 parts of collagen peptides;
390 parts of fat substances: comprising 75 parts of medium-chain triglycerides, 62 parts of sunflower oil, 66 parts of soybean oil, 70 parts of low erucic acid rapeseed oil, and the rest being edible carrier maltooligosaccharide; after mixing the ingredients, they were microencapsulated into vegetable oil microcapsule powder; the edible carriers in this step could also be: sodium caseinate, sodium tripolyphosphate, or mixed tocopherol concentrate;
241 parts of carbohydrate maltodextrin;
215 parts of dietary fiber: comprising 172 parts of resistant dextrin and 43 parts of oligofructose;
19.4 parts of multivitamin: comprising 9.8 parts of L-ascorbic acid, 0.86 parts of dl-α-tocopheryl acetate, 1.03 parts of niacinamide, 0.51 parts of D-calcium pantothenate, 0.14 parts of pyridoxine hydrochloride, 0.14 parts of thiamine mononitrate, 0.06 parts of vitamin A palmitate, 0.12 parts of riboflavin, 0.02 parts of folic acid, 0.003 parts of phytomenadione, 0.002 parts of D-biotin, 0.0003 parts of cholecalciferol, 0.0003 parts of cyanocobalamin, and the rest being maltodextrin as the multivitamin carrier;
322 parts of complex minerals: comprising 52.6 parts of tricalcium phosphate, 4.3 parts of iron pyrophosphate, 58.6 parts of magnesium carbonate, 54 parts of potassium citrate, 2 parts of dipotassium hydrogen phosphate, 136 parts of sodium citrate, 1.4 parts of zinc citrate, 0.005 parts of sodium selenite, and the rest being maltodextrin as the complex mineral carrier.

### Preparation method:

(1) Accurately weighing the raw materials and dividing them into 3 groups according to the mass ratio, from low to high
   Raw material group 1: multivitamin, oligofructose, collagen peptides, and casein;
   Raw material group 2: resistant dextrin, carbohydrate maltodextrin, and complex minerals;
   Raw material group 3: whey protein, vegetable oil microcapsule powder;
(2) Premixing raw materials with low additive amounts
   Premix 1: Raw material group 1 was transferred to the premixer, and mixed at 30 rpm for 20 min to obtain premix 1;
   Premix 2: Premix 1 was taken out, and then raw material group 2 was transferred to the premixer, and mixed at 30 rpm for 20 min to obtain premix 2;
(3) Total mixing
   Total mixing material 1: Premix 1 and 2 were transferred to the total mixer, and mixed at 30 rpm for 30 min to obtain total mixing material 1;
   Total mixing material 2: raw material group 3 was transferred to the total mixer, and mixed with total mixing material 1 at 30 rpm for 40 min to obtain the finished product.
(4) Aliquoting and packaging
   The mixed finished products were aliquoted and packaged under sterile conditions, and all the above operational steps were carried out in a clean and dry environment.

### Example 2. Nutritional supplement for pregnant women according to the present invention

### Formula:

496 parts of protein: comprising 388 parts of whey protein, 66 parts of casein, and 44 parts of collagen peptides;
420 parts of fat substances: comprising 107 parts of medium-chain triglycerides, 61 parts of sunflower oil, 68 parts of soybean oil, 72 parts of low erucic acid rapeseed oil, and the rest being edible carrier maltooligosaccharide; after mixing the ingredients, they were microencapsulated into vegetable oil microcapsule powder; the edible carriers in this step could also be: sodium caseinate, sodium tripolyphosphate, or mixed tocopherol concentrate;
203 parts of carbohydrate maltodextrin;
195 parts of dietary fiber: comprising 135 parts of resistant dextrin and 60 parts of oligofructose;
23.4 parts of multivitamin: comprising 11.6 parts of L-ascorbic acid, 1.31 parts of dl-α-tocopheryl acetate, 0.42 parts of niacinamide, 0.26 parts of D-calcium pantothenate, 0.22 parts of pyridoxine hydrochloride, 0.18 parts of thiamine mononitrate, 0.08 parts of vitamin A palmitate, 0.16 parts of riboflavin, 0.021 parts of folic acid, 0.004 parts of phytomenadione, 0.004 parts of D-biotin, 0.0005 parts of cholecalciferol, 0.0002 parts of cyanocobalamin, and the rest being maltodextrin as the multivitamin carrier;
260 parts of complex minerals: comprising 72.1 parts of tricalcium phosphate, 4 parts of iron pyrophosphate, 33.7 parts of magnesium carbonate, 47 parts of potassium citrate, 3.1 parts of dipotassium hydrogen phosphate, 89 parts of sodium citrate, 0.8 parts of zinc citrate, 0.004 parts of sodium selenite, and the rest being maltodextrin as the complex mineral carrier.

### Preparation method:

(1) Accurately weighing the raw materials and dividing them into 3 groups according to the mass ratio, from low to high
   Raw material group 1: multivitamin, oligofructose, collagen peptides, and casein;
   Raw material group 2: resistant dextrin, carbohydrate maltodextrin, and complex minerals;
   Raw material group 3: whey protein, vegetable oil microcapsule powder;
(2) Premixing raw materials with low additive amounts
   Premix 1: Raw material group 1 was transferred to the premixer, and mixed at 25 rpm for 20 min to obtain premix 1;
   Premix 2: Premix 1 was taken out, and then raw material group 2 was transferred to the premixer, and mixed at 25 rpm for 20 min to obtain premix 2;
(3) Total mixing
   Total mixing material 1: Premix 1 and 2 were transferred to the total mixer, and mixed at 25 rpm for 20 min to obtain total mixing 1;
   Total mixing material 2: raw material group 3 was transferred to the total mixer, and mixed with total mixing material 1 at 25 rpm for 50 min to obtain the finished product.
(4) Aliquoting and packaging
   The mixed finished products were aliquoted and packaged under sterile conditions, and all the above operational steps were carried out in a clean and dry environment.

### Example 3

Other conditions and steps were the same as in Example 1, except that the amount of maltodextrin was changed to 450 parts, the amount of resistant dextrin was changed to 72 parts, and the amount of oligo fructose was changed to 12 parts.

### Example 4

Other conditions and steps were the same as in Example 1, except that the amount of resistant dextrin was changed to 102 parts, the amount of oligofructose was changed to 37 parts, and the amount of whey protein was changed to 162 parts.

### Example 5

Other conditions and steps are the same as in Example 1, except that the amount of whey protein was changed to 192 parts, the amount of casein was changed to 42 parts, and the amount of resistant dextrin was changed to 96 parts.

### Example 6

Other conditions and steps were the same as in Example 1, except that the amount of folic acid was changed to 0.006 parts, and the amount of vitamin C was changed to 2.1 parts, without adding vitamin B12, iron pyrophosphate, or oligo fructose.

The beneficial effects of the present invention were further demonstrated by the following experimental example:

### Experimental example 1 Study on the effects of the nutritional supplementary food according to the present invention on physical function

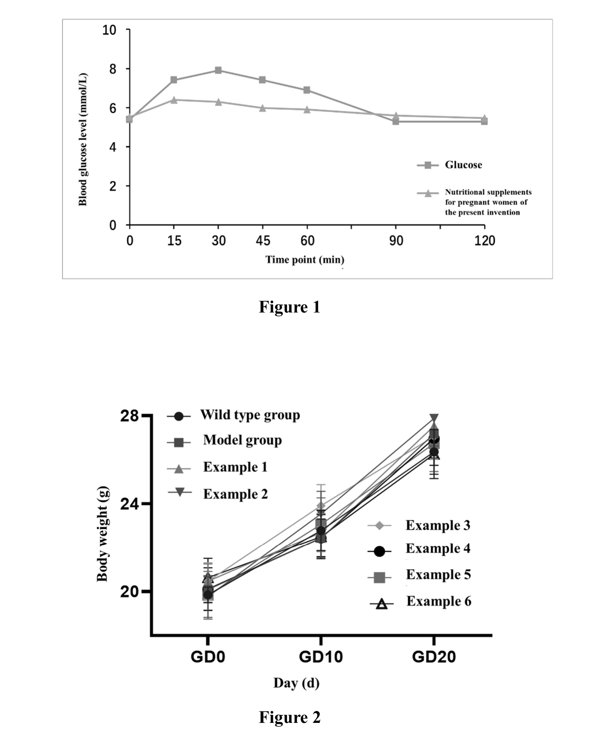

1. The nutritional supplement prepared according to Example 1 underwent GI value testing, and the steps involved were as follows:
   20 female adults were included, who met the following criteria: (1) healthy and without a history of diabetes; (2) not taking any medications or health supplements that affect glucose metabolism in the recent period; (3) not suffering from serious illnesses or undergoing surgical treatment in the past three months; (4) aged between 20 and 35 years. The testing process followed the ISO_26642-2010 standard, with blood collection and blood glucose measurement conducted by trained testers. The test results showed that the glycemic index (GI value) of the nutritional supplement food according to the present invention was 32.5, and the average blood glucose tolerance curve is shown in Figure 1. According to the "WS/T 652-2019 Method for Determining the Glycemic Index of Foods", if GI ≤ 55, it was considered a low GI food. Low GI foods were released slowly after digestion and absorption, resulting in a low peak glucose level in the blood and a slow decline rate, which helps maintain blood glucose homeostasis. This indicated that the nutritional supplement food formula was expected to help maintain blood glucose levels in pregnant women and safeguard the health of both women and fetuses.
2. Testing the nutritional supplement food for pregnant women prepared in Examples 1-6 in mice

C57BL/KsJ-Lep^{db/+} (db/+) mice were heterozygous (Lep^{db/+}) models of leptin gene knockout mice (Lepdb/db), and were widely considered as the most representative animal model for studying GDM. Post-pregnancy db/+ mice might exhibit symptoms similar to those of GDM, such as abnormal glucose tolerance, insulin resistance, and weight gain. This experimental example aimed to investigate whether the nutritional supplement food formula could improve glucose metabolism, insulin tolerance, and immune dysfunction in db/+ mice by raising and breeding these mice, as well as measuring their blood glucose, serum insulin, and immune function levels.

Fifteen female and fifteen male C57BL/KsJ^{+/+} (wild type) mice, and 105 female and 105 male C57BL/KsJ^{db/+} (db+) mice were selected for the experiment. During the experiment, the environmental temperature was set at 25±1 °C, humidity at 40%±10%, with a 12-hour light period and a 12-hour dark period. After feeding the mice for 10-12 weeks, each group of female mice was housed overnight with male mice of the same age and genotype in a 1:1 ratio. The next morning, the presence of a positive vaginal plug in the female mice was detected. If a positive vaginal plug was found, it was confirmed that mating had been successful, and this was recorded as gestation day 0 (GD0). The female mice with positive vaginal plugs were randomly divided into three groups based on body weight: the wild-type group (wild-type mice), the model group (db/+ mice), and the Examples 1-6 groups (db/+ mice). Since not every mouse could become pregnant after mating, and some mice failed to reach gestation day 20 (GD20) during the gestation process, the number of mice in each experimental group was controlled to 10. For the successful mating mice in the Examples 1-6 groups, mice were administered with the suspension of Examples 1-6 (prepared with pure water) at 500 mg/(kg·day) via gavage daily. The mice in wild-type and model groups were given the same dose of saline via gavage. Apart from daily gavage, all groups of mice had normal food intake. Detection indicators included glucose tolerance, insulin resistance, blood glucose levels during pregnancy, insulin levels during pregnancy, and body weight during pregnancy. The results are presented in Tables 1-5 (where "Mean" represents the mean value, and "SD" represents the standard deviation) and Figures 2-6.

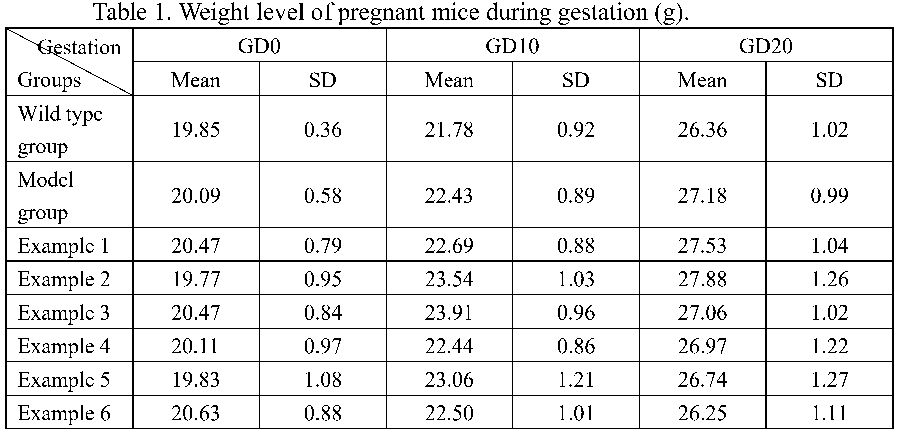

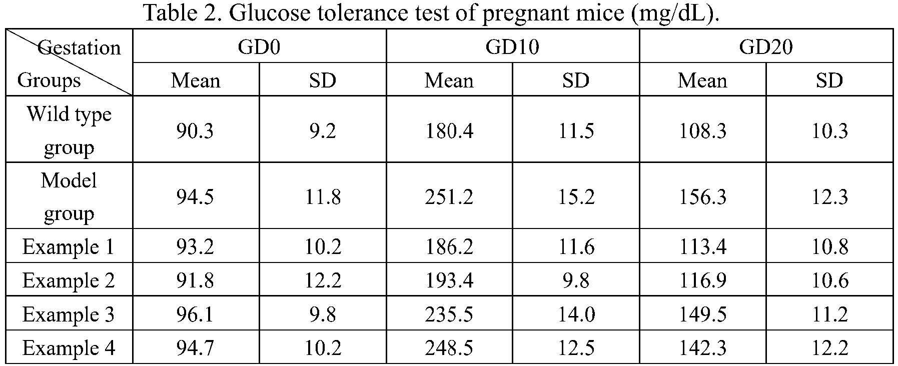

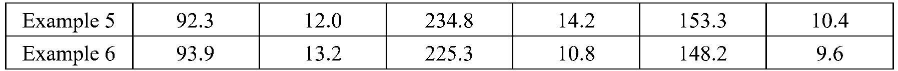

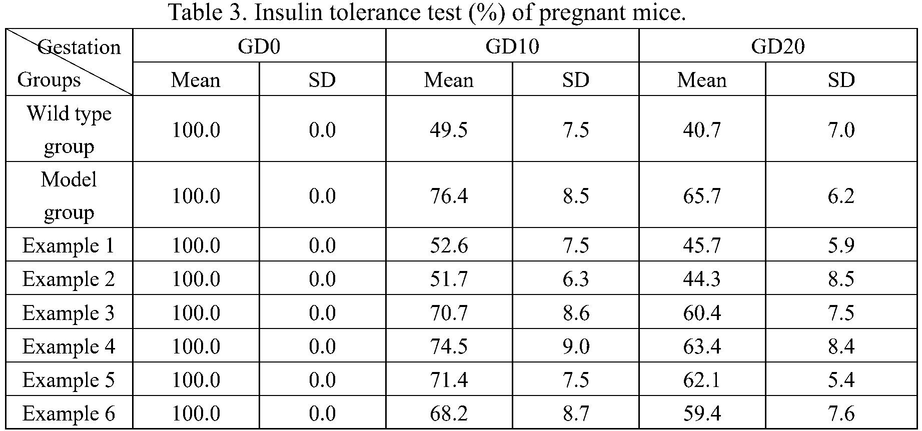

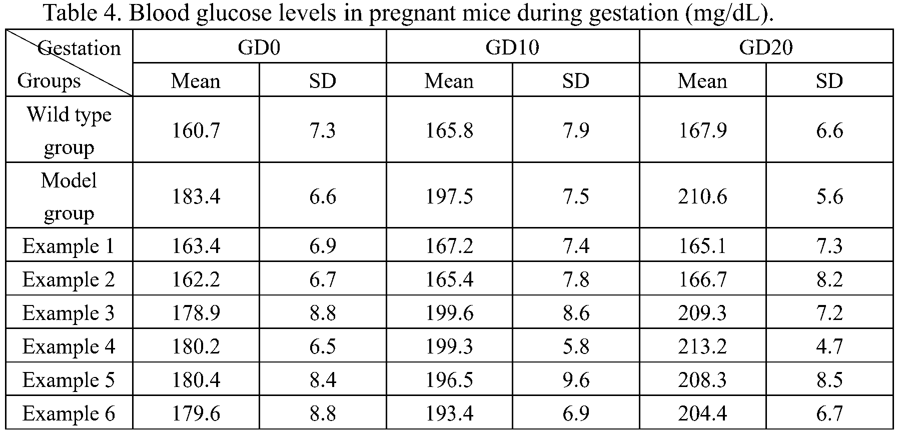

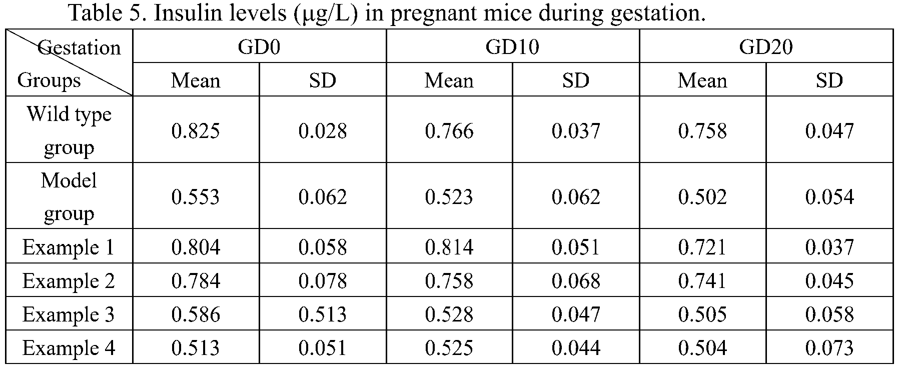

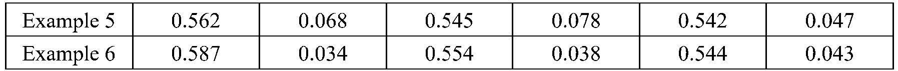

On days 0, 10, and 20 of gestation (GD0, GD10, GD20) in mice, the fasting body weight of the mice was measured. As shown in Table 1 and Figure 2, there was no significant difference in body weight gain among the groups of mice during gestation (P > 0.05). The results indicated that Examples 1-6 did not affect the weight gain of pregnant mice and help maintain their body weight.

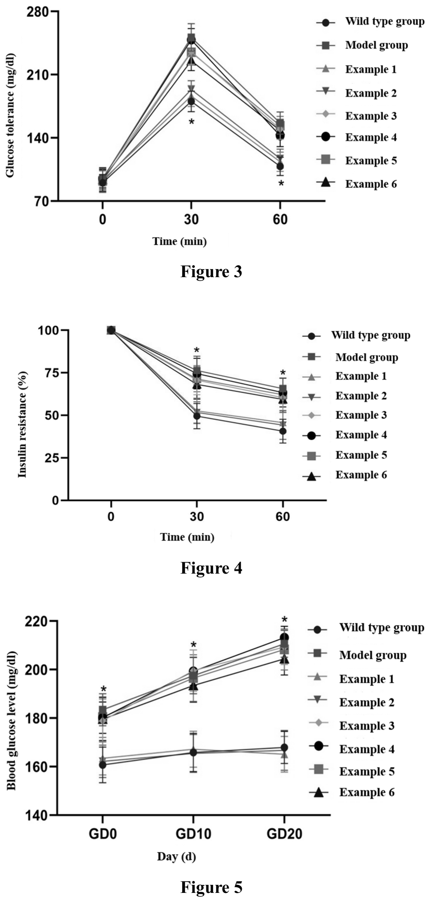

When mice were pregnant for 10 days (GD10), they were fasted for 6 hours in the morning and intraperitoneally injected with glucose at 2 g/kg. Blood glucose levels were measured by tail blood sampling at 0, 30, and 60 minutes after glucose administration for glucose tolerance test. According to Table 2 and Figure 3, compared with wild-type mice, the blood glucose levels of mice in the model group and Examples 3-6 groups significantly increased at 30 and 60 minutes after glucose administration (*P* < 0.05), while the blood glucose levels of mice in Example 1 and Example 2 groups were close to those of wild-type mice (*P >* 0.05). When mice were at gestational day 10 (GD10), they were fasted for 6 h in the morning and intraperitoneally injected with 0.75 U/kg insulin. The insulin levels of the mice were detected using an ELISA kit. As shown in Table 3 and Figure 4, compared to wild-type mice, the serum insulin levels of mice in the model group and Examples 3-6 groups were significantly reduced at 30 and 60 minutes after glucose administration (*P* < 0.05), while the insulin levels of mice in Example 1 and Example 2 groups were close to those of wild-type mice (*P* > 0.05). The results indicated that the blood glucose levels of mice in the model group significantly increased 30 minutes after the first glucose injection, suggesting glucose intolerance during pregnancy in this type of model mice. However, after gavage with Example 1 and Example 2, glucose intolerance in pregnant mice was significantly alleviated and could be restored to normal levels. By detecting the serum insulin levels of mice, it was further confirmed that Example 1 and Example 2 could restore the insulin response level of pregnant mice to the same level as normal mice, indicating that Example 1 and Example 2 could improve glucose metabolism and insulin response in pregnant mice.

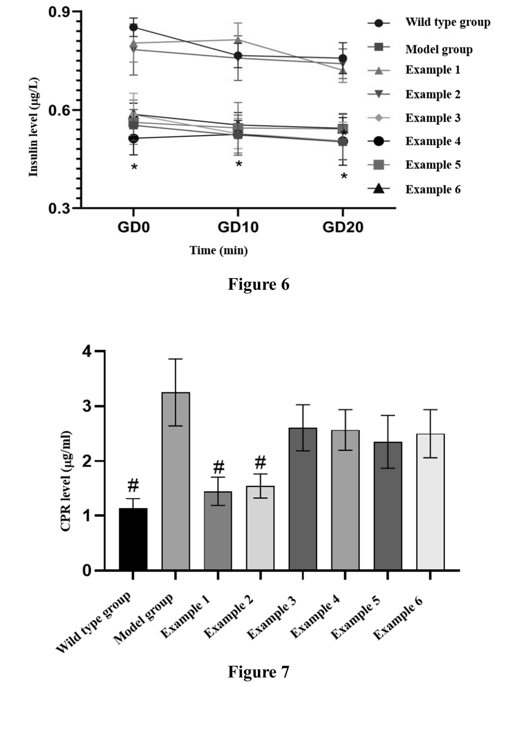

On gestation days 0, 10, and 20 (GD0, GD10, GD20), respectively, after gavage of nutritional supplement foods obtained in each Example and normal feeding, the blood glucose levels and serum insulin levels of mice were measured. As shown in Table 4 and Figure 5, compared with wild-type mice, the blood glucose levels of mice in the model group and Examples 3-6 groups were significantly elevated on gestation days 0, 10, and 20 (*P* < 0.05), while there was no significant difference for the blood glucose levels of mice in Example 1 and Example 2 groups (*P* > 0.05). From Table 5 and Figure 6, it can be found that compared to wild-type mice, the insulin content of mice in the model group and Examples 3-6 groups on days 0, 10, and 20 of pregnancy was significantly reduced (*P* < 0.05), while there was no significant difference for the insulin content in Example 1 and Example 2 groups (*P* > 0.05). The results indicated that the blood glucose levels and serum insulin levels of mice in Example 1 and Example 2 groups remained basically consistent with those of wild-type mice throughout pregnancy, indicating that Examples 1 and 2 could effectively alleviate gestational hyperglycemia.

### 3. Effects of nutritional supplements for pregnant women on inflammatory response and renal function in mice

C-reactive protein (CRP) is a non-glycosylated multimeric protein synthesized by hepatocytes under the influence of cytokines such as interleukin-6. It serves as a sensitive indicator of systemic inflammation and plays a mediating role in various pathophysiological processes. It can be used as an important indicator, independent of other diabetes risk factors, to predict the occurrence, progression, and prognosis of GDM. On day 15 of gestation, blood samples were collected from mice via the tail vein to measure CRP levels. As shown in Figure 7, compared to the model group, the serum CRP levels in wild-type, Example 1, and Example 2 groups were significantly reduced (*P* < 0.05), while CRP levels in Examples 3-6 groups remained at a higher level (*P* > 0.05). The results indicated that Examples 1 and 2 could alleviate the systemic inflammation levels associated with GDM.

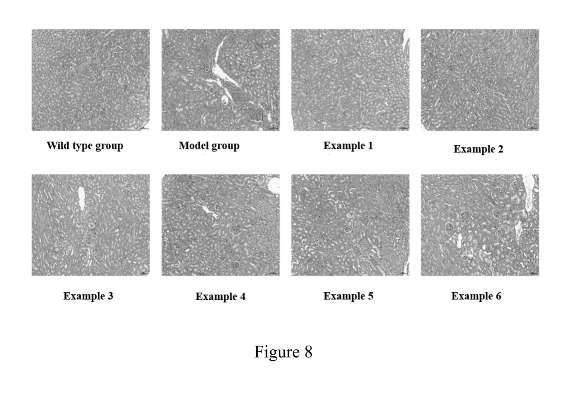

GDM often accompanies lipid metabolism disorders, leading to lipid deposition in the glomerulus, which can reduce the reabsorption function of proximal tubular epithelial cells and also cause damage and apoptosis of glomerular cells, ultimately resulting in impaired renal function. On day 21 of gestation (GD21), mice were euthanized by cervical dislocation, and their kidney tissues were dissected and obtained. After being embedded in paraffin and sectioned, the kidney tissues were stained with hematoxylin and eosin (HE) to observe the effects of each Example on the kidney tissues of mice. As shown in Figure 8, the wild-type group of mice exhibited no significant pathological changes, while the model group of mice showed the most severe pathological symptoms, including glomerulosclerosis, swelling of cells in the renal capsule parietal layer , and thickening of the basement membrane. The kidney lesions of mice in Example 1 and Example 2 groups were significantly alleviated, while mice in Examples 3-6 groups still exhibited varying degrees of histocyte degeneration. The results indicated that Example 1 and Example 2 could effectively alleviate kidney damage and impaired renal function caused by GDM.

The above experimental results indicated that Example 1 and Example 2 could effectively alleviate GDM symptoms in db/+ mice, such as hyperglycemia, glucose intolerance, insulin resistance, etc., and maintain normal weight gain during pregnancy in GDM mice. At the same time, Example 1 and Example 2 could effectively reduce CRP levels, alleviate the level of systemic inflammatory response associated with GDM, protect kidney organs, and maintain kidney function.

## Claims

1. A nutritional composition for pregnant women, **characterized in that** it is prepared from raw materials in the following parts by weight:
324-630 parts of protein substances, 286-584 parts of fat substances, 187-369 parts of carbohydrate, 182-309 parts of dietary fiber substances, 12.2-23.9 parts of multivitamin, and 230-473 parts of complex minerals;
the protein substances are composed of whey protein, casein, and collagen peptide in a mass ratio of 380-450:50-70:40-50;
the fat substances are composed of low erucic acid rapeseed oil, sunflower oil, medium-chain triglycerides, soybean oil, and edible carriers in a mass ratio of 70-80:60-65:70-120:60-70:110-120;
the dietary fiber substances are composed of resistant dextrin and oligofructose in a mass ratio of 130-200:40-80.

2. The nutritional composition for pregnant women according to claim 1, **characterized in that** the carbohydrate is maltodextrin.

3. The nutritional composition for pregnant women according to claim 1, **characterized in that** the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione, D-biotin, cholecalciferol, cyanocobalamin, and an edible carrier in 9-12:0.8-1.4:0.4-1.1:0.2-0.6:0.1-0.3:0.1-0.2:0.06-0.08:0.1-0.2:0.02-0.03:0.003-0.004:0.002-0.004:0.0003-0.0005:0.0002-0.0003:6-10.

4. The nutritional composition for pregnant women according to claim 1, **characterized in that** the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 50-75:3-5:30-60:40-60:2-4:80-150:0.5-2.5:0.004-0.005:10-15.

5. The nutritional composition for pregnant women according to any one of claims 1-4, **characterized in that** it is prepared from raw materials in the following parts by weight:
517 parts of protein substances, 390 parts of fat substances, 241 parts of maltodextrin, 215 parts of dietary fiber substances, 19.4 parts of multivitamin, and 322 parts of complex minerals;
the protein substances are composed of whey protein, casein, and collagen peptide in a mass ratio of 420:53:44;
the fat substances are composed of low erucic acid rapeseed oil, sunflower oil, medium-chain triglycerides, soybean oil, and edible carriers in a mass ratio of 70:62:75:66:117;
the dietary fiber substances are composed of resistant dextrin and oligofructose in a mass ratio of 172:43;
the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione, D-biotin, cholecalciferol, cyanocobalamin, and an edible carrier in 9.8:0.86:1.03:0.51:0.14:0.14:0.06:0.12:0.02:0.003:0.002:0.0003:0.0003:6.7144;
the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 52.6:4.3:58.6:54:2:136:1.4:0.005:13.095.

6. The nutritional composition for pregnant women according to any one of claims 1-4, **characterized in that** it is prepared from raw materials in the following parts by weight:
496 parts of protein substances, 420 parts of fat substances, 203 parts of maltodextrin, 195 parts of dietary fiber substances, 23.4 parts of multivitamin, and 260 parts of complex minerals;
the protein substances are composed of whey protein, casein, and collagen peptide in a mass ratio of 388:66:42;
the fat substances are composed of low erucic acid rapeseed oil, sunflower oil, medium-chain triglycerides, soybean oil, and edible carriers in a mass ratio of 72:61:107:68:112;
the dietary fiber substances are composed of resistant dextrin and oligofructose in a mass ratio of 135:60;
the multivitamin is composed of L-ascorbic acid, dl-α-tocopheryl acetate, niacinamide, D-calcium pantothenate, pyridoxine hydrochloride, thiamine mononitrate, vitamin A palmitate, riboflavin, folic acid, phytomenadione, D-biotin, cholecalciferol, cyanocobalamin, and an edible carrier in 11.6:1.31:0.42:0.26:0.22:0.18:0.08:0.16:0.021:0.004:0.004:0.0005:0.0002: 9.1403;
the complex minerals are formed by mixing tricalcium phosphate, iron pyrophosphate, magnesium carbonate, potassium citrate, dipotassium hydrogen phosphate, sodium citrate, zinc citrate, sodium selenite, and an edible carrier in 72.1:4:33.7:47:3.1:89:0.8:0.004:10.296.

7. The nutritional composition for pregnant women according to claim 6, **characterized in that** the edible carrier in the fat substances is any one or more of maltooligosaccharide, sodium caseinate, and mixed tocopherol concentrate; and the edible carrier in the multivitamins or complex minerals is maltodextrin.

8. A method for preparing the nutritional composition for pregnant women according to any one of claims 1 to 7, **characterized in that** it comprises the following steps:
1) The raw materials are weighed according to the specified parts by weight;
2) Multivitamins, oligofructose, collagen peptides, and casein are mixed and stirred at 20-30 rpm for 20-30 min to obtain premix 1; resistant dextrin, carbohydrates, and complex minerals are mixed and stirred at 20-30 rpm for 20-30 min to obtain premix 2;
3) The premix 1 and premix 2 obtained in step 2) are mixed and stirred at 20-30 rpm for 20-30 min to obtain the total mix 1; whey protein, fat substances, and total mix 1 are mixed and stirred at 20-30 rpm for 40-60 min to obtain the final product.

9. The use of the nutritional composition for pregnant women according to any one of claims 1 to 7 in the manufacture of food for improving the physical function of pregnant women.

10. The use according to claim 9, **characterized in that** the food is a functional food or dietary supplement that regulates blood sugar and blood lipids in pregnant women, and/or promotes normal weight gain during pregnancy.
